# EUROPÄISCHE PATENTANMELDUNG

(11) **EP 4 830 507 A1**
(43) Veröffentlichungstag der Anmeldung: **28.10.2026**
(21) Anmeldenummer: 26155880.3
(22) Anmeldetag: 03.02.2026
(51) Int. Cl.: A01D 41/12, A01D 43/08, A01F 12/46

(54) **AUSWURFKRÜMMER FÜR EINE SELBSTFAHRENDE ERNTEMASCHINE**

(30) Priorität: 26.03.2025 DE 102025111819
(71) Anmelder: CLAAS Saulgau GmbH, 88340 Bad Saulgau (DE)
(72) Erfinder: Bauknecht, Benjamin, 88356 Ostrach (DE); Deufel, Tobias, 88605 Meßkirch-Menningen (DE); Löffler, Niklas, 88367 Hohentengen (DE)
(74) Vertreter: CLAAS Gruppe

(57) **Zusammenfassung**

Ein Auswurfkrümmer (6) für eine selbstfahrende Erntemaschine (1) hat Wände (12, 13, 14), die einen sich von einem Einlass zu einem Auslass erstreckenden Gutkanal (17) begrenzen, und die wenigstens lokal mehrschichtig als ein wenigstens ein Blech (15, 16) aus Aluminium umfassendes Sandwichprofil ausgebildet sind.

## Beschreibung

Die vorliegende Erfindung betrifft einen Auswurfkrümmer für eine selbstfahrende Erntemaschine, insbesondere für einen Feldhäcksler.

Aus EP 2 266 383 B1 ist ein Feldhäcksler mit einem Auswurfkrümmer bekannt, mit dem Erntegut laufend auf ein neben dem Feldhäcksler herfahrende Begleitfahrzeug übergeladen werden kann, während sich der Feldhäcksler im Ernteeinsatz über ein Feld bewegt. Der Feldhäcksler tragt einen Erntevorsatz, der seitlich nicht über die Karosserie des Feldhäckslers übersteht. Das Begleitfahrzeug kann daher eng neben dem Feldhäcksler herfahren, und es genügt ein kurzer Auswurfkrümmer, damit der Strom des Ernteguts, der aus dem Auswurfkrümmer austritt, zuverlässig eine Ladefläche des Begleitfahrzeugs trifft.

Bestrebungen, den Erntevorgang schneller und effizienter zu machen, haben zur Entwicklung von Feldhäckslern von immer höherer Leistung geführt, die, um ausgelastet zu sein, einen Erntevorsatz brauchen, der erheblich breiter ist als sie selber. Um im Betrieb Kollisionen zwischen dem Begleitfahrzeug und einem solchen breiten Erntevorsatz zu vermeiden, muss das Begleitfahrzeug in größerem Abstand neben dem Feldhäcksler herfahren; damit der Erntegutstrom weiterhin zuverlässig die Ladefläche des Begleitfahrzeugs treffen kann, muss der Auswurfkrümmer entsprechend verlängert werden. Ein weit überstehender Auswurfkrümmer führt jedoch zu Problemen, wenn der Feldhäcksler zwischen Ernteeinsätzen auf öffentlichen Straßen unterwegs ist. EP 4 399 948 A1 offenbart einen Feldhäcksler, bei dem ein Überstand des Auswurfkrümmers über die Karosserie dadurch begrenzt wird, dass zwei in Gutfördereinrichtung aufeinanderfolgende Abschnitte des Auswurfkrümmers schwenkbar verbunden sind. Während der Auswurfkrümmer in einer ausgestreckten Konfiguration weit genug über die Karosserie des Feldhäcksler überstehen kann, um die Ladefläche des Begleitfahrzeugs zu erreichen, kann in einer zusammengeklappten Konfiguration der Überstand auf ein straßenverkehrskompatibles Maß begrenzt werden.

Da der Auswurfkrümmer zumindest in der ausgestreckten Konfiguration nur an einem Einlassende mit der Karosserie des Feldhäckslers verbunden und ansonsten freitragend ist, ist das Material des Auswurfkrümmers durch erhebliche Drehmomente belastet, und unkontrollierte Schwingungen des Auswurfkrümmers, die beim Fahren auf dem unebenen Untergrund eines Felds auftreten können, können zu Schäden führen.

Aufgabe der Erfindung ist, einen Auswurfkrümmer vorzugschlagen, der trotz hoher Reichweite robust und unempfindlich gegen Schwingungen ist.

Die Aufgabe wird gelöst durch einen Auswurfkrümmer mit den Merkmalen des Anspruchs 1. Indem die Wände des erfindungsgemäßen Auswurfkrümmers wenigstens lokal wenigstens ein Blech aus Aluminium anstelle von herkömmlicherweise gebräuchlichem Stahlblech umfassen, kann das Gewicht des Auswurfkrümmers und somit auch die mit Schwingbewegungen des Auswurfkrümmers verbundene Belastung reduziert werden. Um die im Vergleich zum Stahlblech geringere Belastbarkeit des Aluminiums zu kompensieren, ist die Wand wenigstens lokal mehrschichtig als ein Sandwichprofil strukturiert.

Ein solches Sandwichprofil kann wenigstens ein äußeres Blech und ein sich zwischen dem äußeren Blech und dem Gutkanal erstreckendes inneres Blech umfassen, wobei es für die Belastbarkeit des Sandwichprofils wichtig ist, dass in einer durch den Auswurfkrümmer verlaufenden Schnittebene zwischen zwei Bereichen, in denen das äußere und das innere Blech aneinander befestigt sind, ein Bereich liegt, in dem die Bleche voneinander beabstandet sind.

Um eine hohe Biegesteifigkeit bei geringem Gewicht zu erreichen, sollte der Bereich, in dem die Bleche voneinander beabstandet sind, sich in Längsrichtung des Gutkanals erstrecken.

Um einem möglichen Haftenbleiben von Erntegut an den Wänden des Gutkanals entgegenzuwirken, sollte ein Bereich des inneren Blechs, der den Gutkanal begrenzt, eben sein. Um den Bereich zu bilden, in dem die Bleche voneinander beabstandet sind, muss dann das äußere Blech Unebenheiten aufweisen. Ein Bereich des inneren Blechs, der nicht den Gutkanal begrenzt, kann hingegen sehr wohl uneben sein; so kann es für die Steifigkeit des Auswurfkrümmers wünschenswert sein, das innere Blech mit an seinen Längskanten abgewinkelten Flanschen zu formen.

In Gutfördereinrichtung aufeinanderfolgende Abschnitte des Auswurfkrümmers können miteinander beweglich, insbesondere schwenkbar, verbunden sein.

Um ein Entweichen von Flüssigkeit aus dem Gutkanal zu vermeiden, ist vorzugsweise in der einer ausgestreckten Konfiguration eine Dichtung zwischen den Abschnitten komprimiert. Um zu verhindern, dass diese zwischen den Abschnitten alsbald zerrieben oder bei stärkeren Erschütterungen abgerissen wird, kann die Dichtung einen in eine Nut eines der Abschnitte formschlüssig eingreifenden Fußabschnitt aufweisen.

Ein besonders sicherer Halt der Dichtung kann dadurch erreicht werden, dass die Nut und der Fußabschnitt ein Schwalbenschwanzprofil aufweisen.

Um sicher zu dichten, sollte ein aus der Nut vorspringender Abschnitt der Dichtung gut nachgiebig sein; eine übermäßige Nachgiebigkeit ihres in die Nut eingreifenden Anschnitts beeinträchtigt jedoch den festen Sitz. Um beides miteinander zu vereinbaren, kann ein Hohlraum der Dichtung wenigstens überwiegend in einem aus der Nut vorspringenden Abschnitt der Dichtung angeordnet sein.

Die Förderrichtung des Ernteguts durch den Gutkanal verläuft typischerweise in einer Ebene, die vertikal orientiert ist, wenn der Auswurfkrümmer an einer Erntemaschine angebracht ist. Die Abschnitte sind vorzugsweise um eine zu der Ebene parallele Achse schwenkbar miteinander verbunden, um eine Bewegung des stromabwärtigen Abschnitts relativ zum stromaufwärtigen zu ermöglichen, in der sich die Höhe des Schwerpunkts des stromaufwärtigen Abschnitts nur wenig oder gar nicht ändert und, falls sich die Höhe des Schwerpunkts ändert, dieser in der ausgestreckten Konfiguration vorzugsweise höher liegt als in der zusammengeklappten und jeder intermediären Konfiguration. So kann ein unsanftes Anschlagen des stromabwärtigen Abschnitts bei Erreichen der ausgestreckten Konfiguration vermieden werden, das zu einer Überbeanspruchung des Auswurfkrümmers führen könnte.

Ein die Abschnitte verbindendes Scharnier ist vorzugsweise an dem Sandwichprofil verankert.

Die Verankerung kann durch ein Sockelelement vermittelt sein, wobei eine Grundplatte des Sockelelements den Bereich des Sandwichprofils überdeckt, in dem die Bleche voneinander beabstandet sind, und eine von der Grundplatte abgewinkelte Lasche einen komplementär zu dem Bereich ausgeschnittenen und an dem äußeren Blech verschweißten Rand aufweist.

Neben dem oben erwähnten kann der Auswurfkrümmer ein zweites Sandwichprofil an einer gegenüberliegenden Wand des Gutkanals aufweisen. Wenn an einem der Sandwichprofile wie oben beschrieben ein Scharnier verankert ist, dann kann an dem anderen zweckmäßigerweise ein Riegel zum Fixieren der Abschnitte in der ausgestreckten Konfiguration verankert sein.

Von den schwenkbar verbundenen Abschnitten kann ferner eine Endklappe sein, die in an sich bekannter Weise das stromabwärtige Ende des Auswurfkrümmers bildet und an einen stromaufwärtigen Abschnitt schwenkbar angelenkt ist, um die Neigung, mit der der Erntegutstrom den Auswurfkrümmer verlässt, einzustellen. Um ein Ausreißen von gelenkig verbundenen Blechen der Endklappe und des stromaufwärtigen Abschnitts aufgrund von Erschütterung zu vermeiden, kann der stromaufwärtige Abschnitt des Auswurfkrümmers einen der Endklappe zugewandten Abschlussflansch, ein über den Abschlussflansch vorspringendes und in die Endklappe eingreifendes Krümmerendstück und ein Winkelstück umfassen, wobei die Endklappe mit dem anderen Abschnitt über einen Lagerstift verbunden ist, der das Krümmerendstück, eine Seitenwand der Endklappe und den zweiten Schenkel durchsetzt. So kann das Winkelstück zumindest das Ende des stromaufwärtigen Abschnitts verstärken.

Um auch die Endklappe zu verstärken, kann die Seitenwand der Endklappe lokal durch ein Beschlagteil verstärkt sein, durch das der Lagerstift verläuft.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Feldhäcksler mit einem Auswurfkrümmer in ausgestreckter Konfiguration;
- Fig. 2a-e: einen Schnitt durch den Auswurfkrümmer des Feldhäckslers;
- Fig. 3: einen Scharnierbereich zwischen zwei Abschnitten des Auswurfkrümmers; und
- Fig. 4: einen von zwei in dem Scharnierbereich in ausgestreckter Konfiguration aneinander anliegenden Flanschen;
- Fig. 5: einen Verbindungsbereich zwischen dem stromabwärtigen Abschnitt des Auswurfkrümmers und einer Endklappe; und
- Fig. 6: einen Schnitt durch den Verbindungsbereich der Fig. 5.

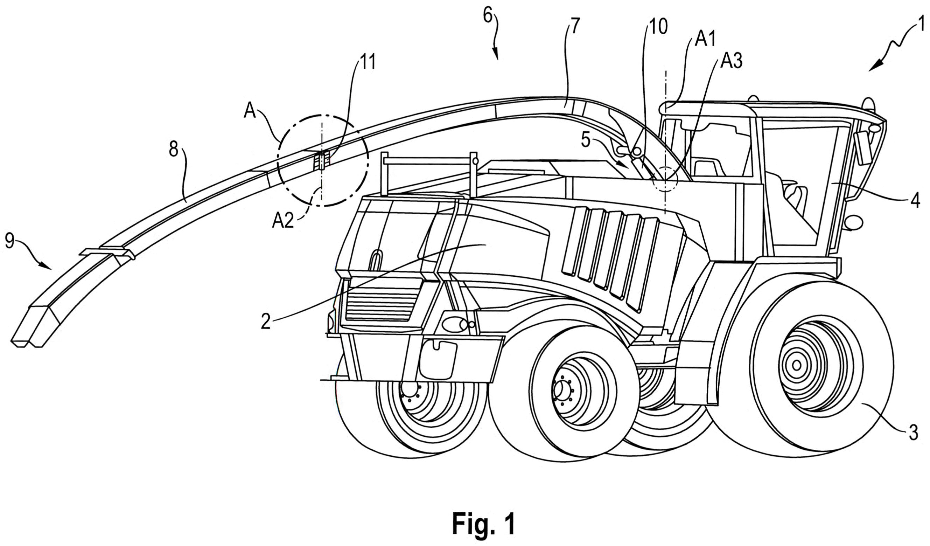

Figur 1 zeigt schematisch eine als Feldhäcksler 1 ausgebildete Erntemaschine in einer Ansicht schräg von hinten. Ein Maschinengehäuse 2 des Feldhäckslers 1 enthält einen Motor (nicht gezeigt) zum Antreiben von Rädern 3 sowie eines an der Frontseite 1a des Feldhäckslers 1 montierbaren Erntevorsatzes (nicht gezeigt). Mit Hilfe des Erntevorsatzes vom Boden aufgenommenes Erntegut wird in einer im Innern des Maschinengehäuses 2 angeordneten Häckseltrommel (nicht gezeigt) zerkleinert und in einen hinter einer Fahrerkabine 4 aufsteigenden Auswurfschacht (nicht gezeigt) ausgegeben. Ein ebenfalls an dem Auswurfschacht im Innern des Maschinengehäuses 2 angeordneter Nachbeschleuniger (nicht gezeigt) schleudert das gehäckselte Erntegut durch einen auf einem Drehkranz 5 an der Oberseite des Maschinengehäuses 2 drehbeweglich montierten Auswurfkrümmer 6. Der Auswurfkrümmer 6 ist hier in einer herunterhängenden, in Bezug auf die Fahrtrichtung des Feldhäckslers 1 nach hinten gerichteten Stellung gezeigt; um den Auswurfkrümmer 6 in eine Stellung zu bringen, in der er Erntegut auf ein neben dem Feldhäcksler 1 herfahrendes Transportfahrzeug überladen kann, ist er um eine vertikale Achse A1 zur Seite und mit Hilfe eines Stellglieds 10 um eine im Drehkranz 5 horizontal verlaufende Achse A3 nach oben schwenkbar.

Der Auswurfkrümmer 6 ist gegliedert in einen Krümmerstutzen 7, der an den Drehkranz 5 angelenkt ist und in Bezug auf die Förderrichtung des hindurchlaufenden Ernteguts einen stromaufwärtigen Abschnitt bildet, eine Endklappe 9 und einen Verlängerungsabschnitt 8, der in Bezug auf den Krümmerstutzen 7 einen stromabwärtigen Abschnitt und in Bezug auf die Endklappe 9 einen stromaufwärtigen Abschnitt des Auswurfkrümmers 6 bildet.

Der Krümmerstutzen 7 und der Verlängerungsabschnitt 8 sind miteinander durch ein Scharnier 11 verbunden, das eine Bewegung des Verlängerungsabschnitts 8 aus der gezeigten, ausgestreckten Konfiguration in eine zusammengeklappte Konfiguration erlaubt, in der der Verlängerungsabschnitt 8 einer Seitenwand des Krümmerstutzens 7 gegenüberliegt. Eine Achse A2 des Scharniers 11 erstreckt sich in einer vertikalen Ebene; der Winkel zwischen der Achse A2 und der Vertikalen ist je nach der Orientierung, die der Krümmerstutzen 7 relativ zur Achse A3 einnimmt, variabel. Vorzugsweise durchläuft die Achse A2 beim Anheben des Krümmerstutzens 7 aus der in Fig. 1 gezeigten in eine zum Überladen geeignete Stellung die vertikale Orientierung; dann bewegt sich der Schwerpunkt des Verlängerungsabschnitts 8 beim Übergang von der zusammengeklappten in die ausgestreckte Konfiguration auf einer Kreisbahn leicht nach oben und kann im Laufe der Bewegung keinen Schwung aufbauen, der beim Erreichen der ausgestreckten Konfiguration dazu führen könnte, dass die Enden des Krümmerstutzens 7 und des Verlängerungsabschnitts 8 unsanft aufeinanderstoßen.

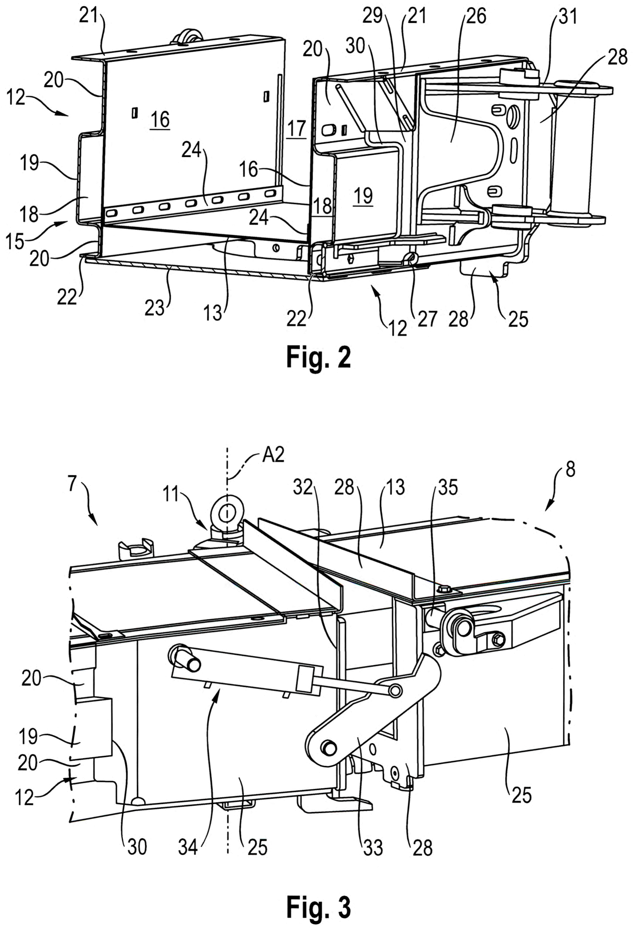

Fig. 2 zeigt einen Schnitt durch den Verlängerungsabschnitt 8 in der Nähe des Scharniers. Der Verlängerungsabschnitt 8 hat einen im Wesentlichen rechteckigen Querschnitt mit zwei Seitenwänden 12, einer unteren Wand 13 und einer oberen Wand 14, die in Fig. 2 weggelassen, aber in Fig. 3 zu sehen ist. Die Seitenwände 12 sind jeweils als Sandwichprofile mit einem äußeren Blech 15 und einem inneren Blech 16 aus Aluminium aufgebaut. Auch die obere und untere Wand 14, 13 bestehen vorzugsweise aus Aluminium. Die einen Gutkanal 17 begrenzenden inneren Bleche 16 der Seitenwände 12 sind eben; die äußeren Bleche 15 bilden ein Hutprofil mit einem von den inneren Blechen 16 beabstandeten, einen Hohlraum 18 begrenzenden Bereich 19 und, ober- und unterhalb von diesem, am inneren Blech 16 anliegenden und daran befestigten Bereichen 20. Entlang von oberen und unteren Kanten der anliegenden Bereiche 20 sind Stege 21, 22 abgewinkelt. Die Stege 21, 22 sind vorgesehen, um daran die (in Fig. 2 nicht dargestellte) obere Wand 14 bzw. ein Versteifungselement 23 zu befestigen. Die untere Wand 13 hat an ihren Längskanten abgewinkelte Stege 24, die an den inneren Blechen 16 befestigt sind. Der Querschnitt der Wände 12, 13, 14 ist über die Länge des Verlängerungsabschnitt 8 hinweg derselbe.

Ein Sockelelement 25 des Scharniers 11 ist am äußeren Blech 15 einer der Seitenwände 12 angebracht. Das Sockelelement 25 ist aus einem Blech zugeschnitten und geformt, dessen Wandstärke größer sein kann als die der Bleche 15, 16. Eine zum inneren Blech 16 parallele Grundplatte 26 des Sockelelements 25 ist entlang ihrer oberen Kante an dem oberen Steg 21 verschweißt. Entlang einer unteren Kante ist eine Lasche 27 abgewinkelt und seinerseits mit dem unteren Steg 22 des äußeren Blechs 15 verschweißt. Eine vom Betrachter abgewandte Kante der Grundplatte 26 ist an einem Flansch 28 verschweißt, der sich um einen Einlass des Verlängerungsabschnitts 8 herum erstreckt. An einer dem Betrachter zugewandten Kante der Grundplatte 20 ist eine weitere Lasche 29 abgewinkelt, deren Randverlauf der Kontur des äußeren Blechs 15 angepasst und auf seiner ganzen Länge mit diesem über Schweißnähte 30 verbunden ist. So bildet das Sockelelement 25 eine hoch belastbare Verbindung zwischen einem Lappen 31 des Scharniers 11 und dem Verlängerungsabschnitt 8.

Der Krümmerstutzen 7 kann denselben Querschnittsaufbau wie oben für den Verlängerungsabschnitt 8 beschrieben mit als Sandwichprofile ausgebildeten Seitenwänden aufweisen, so dass die Hohlräume 18 sich im Wesentlichen über die gesamte Länge des Auswurfkrümmers 6 erstecken. Eine Seitenwand des Krümmerstutzens 7 kann ein zum Sockelelement 25 im Wesentlichen spiegelbildliches Sockelelement 25 als Träger des zweiten Lappens des Scharniers 11 aufweisen.

Fig. 3 zeigt den Übergang zwischen Krümmerstutzen 7 und Verlängerungsabschnitt 8 des Auswurfkrümmers 6, gesehen von einer dem Scharnier 11 gegenüberliegenden Seite her, kurz vor Erreichen der ausgestreckten Konfiguration, in der der Flansch 28 des Verlängerungsabschnitts 8 und ein Flansch 32 des Krümmerstutzens 7 aneinanderstoßen. Die Seitenwände des Krümmerstutzens 7 und des Verlängerungsabschnitts 8 sind an ihren einander zugewandten Enden hinter Sockelelementen 25 verdeckt, die an den Seitenwänden in gleicher Weise wie oben beschrieben fest verankert sind. Eines der Sockelelemente 25 trägt einen Riegel 33 und ein Stellglied 34 zum Schwenken des Riegels 33 und das andere einen Bolzen 35, hinter den der Riegel 33 eingreifen kann, um Krümmerstutzen 7 und Verlängerungsabschnitt 8 in der ausgestreckten Konfiguration, mit aneinander anliegenden Flanschen 28, 32, zu fixieren.

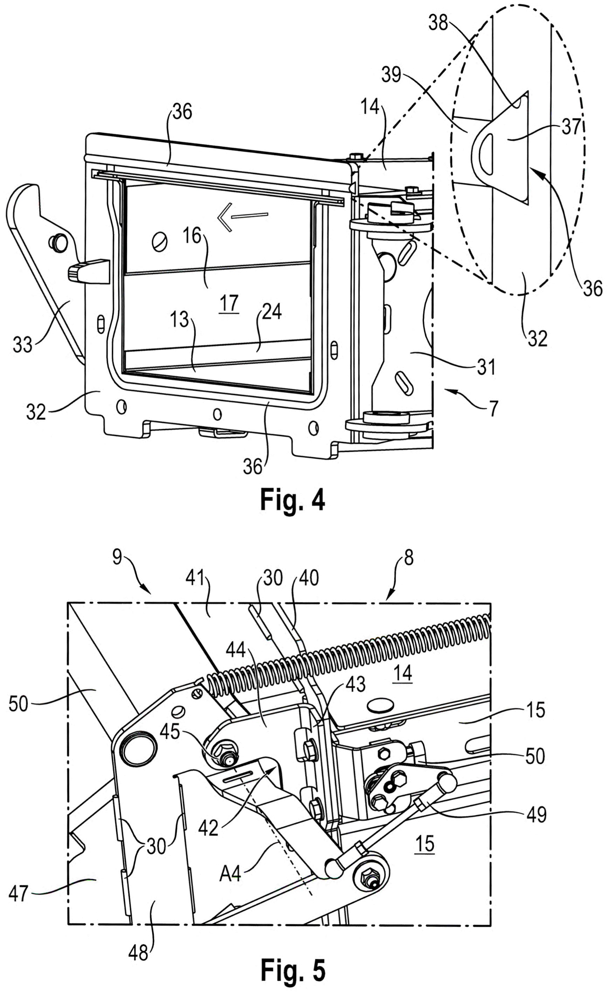

Fig. 4 zeigt das Ende des Krümmerstutzens 7 mit dem Flansch 32. Um den Gutkanal 17 herum erstreckt sich eine elastische Dichtung 36. Wie in der vergrößerten Detaildarstellung zu erkennen, hat die Dichtung 36 einen im Querschnitt trapezförmigen Fußabschnitt 37, der in einer schwalbenschwanzförmigen Nut 38 des Flansches 32 formschlüssig gehalten ist. Ein aus der Nut 38 vorspringender Abschnitt 39 der Dichtung 36 ist großenteils hohl und deshalb wesentlich leichter verformbar als der Fußabschnitt 37; so kann die Dichtung 36 Druck- und eventuell auch Scherkräften, die der gegenüberliegende Flansch 28 im Betrieb darauf ausübt, leicht nachgeben, ohne Gefahr zu laufen, aus ihrer Verankerung in der Nut 38 herausgerissen zu werden.

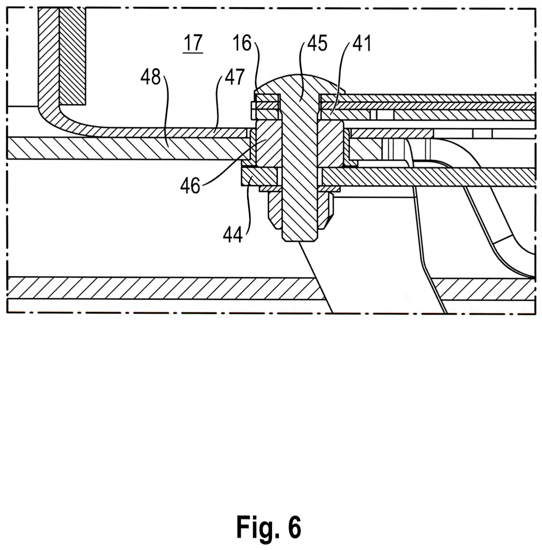

Fig. 5 zeigt einen Übergangsbereich zwischen einem stromabwärtigen Ende des Verlängerungsabschnitts 8 und der daran um eine horizontale Achse A4 schwenkbar angelenkten Endklappe 9. Man erkennt im rechten Teil der Figur einen Ausschnitt des äußeren Blechs 15 einer der Seitenwände 12 und der oberen Wand 14 sowie eines Abschlussflansches 40, der im Wesentlichen spiegelbildlich zum Flansch 28 am diesem gegenüberliegende Ende des Verlängerungsabschnitts 8 ausgebildet und angeordnet ist. Ein Endstück 41 des Rohrkrümmers 6 erstreckt sich in Verlängerung der oberen Wand 14 und der Seitenwände 12 über den Abschlussflansch 40 hinaus. Ein Winkelstück 42 hat einen ersten Schenkel 43, der an dem Abschlussflansch 40 anliegend befestigt ist, und einen zweiten Schenkel 44, der von dem Abschlussflansch 40 rechtwinklig absteht und, wie insbesondere im Schnitt der Fig. 6 zu erkennen, zusammen mit einer Bohrung in einer Seitenwand des Endstücks 41 eine entlang der Achse A4 ausgerichtete Lagerschraube 45 hält. Ein Distanzring 46 umgibt die Lagerschraube 45 zwischen dem Schenkel 44 und dem Endstück 41 und hält so zwischen diesen einen Freiraum offen, in dem sich eine Seitenwand 47 der Endklappe 9 erstreckt. Der Distanzring 46 erstreckt sich durch Öffnungen der Seitenwand 47 und eines die Seitenwand 47 versteifenden, an ihr verschweißten oder in anderer geeigneter Weise befestigten Beschlagteils 48. Das Beschlagteil 48 ist über einen Lenker 49 mit einer Antriebsmechanik 50 am Verlängerungsabschnitt 8 verbunden, durch den die Neigung der Endklappe 9 einstellbar ist. Um eine Torsion der dünnwandigen und leichten Endklappe 9 durch ihr Eigengewicht und das nur an einer Seite durch den Lenker 49 übertragene Drehmoment zu vermeiden, ist das Beschlagteil 48 mit einem an der anderen Seitenwand 47 gegenüberliegenden Beschlagteil durch einen die Breite der Endklappe 9 überbrückenden Stab 51 starr verbunden.

### Bezugszeichen

- 1: Feldhäcksler
- 2: Maschinengehäuse
- 3: Rad
- 4: Fahrerkabine
- 5: Drehkranz
- 6: Auswurfkrümmer
- 7: Krümmerstutzen
- 8: Verlängerungsabschnitt
- 9: Endklappe
- 10: Stellglied
- 11: Scharnier
- 12: Seitenwand
- 13: untere Wand
- 14: obere Wand
- 15: äußeres Blech
- 16: inneres Blech
- 17: Gutkanal
- 18: Hohlraum
- 19: begrenzender Bereich
- 20: anliegender Bereich
- 21: Steg
- 22: Steg
- 23: Versteifungselement
- 24: Steg
- 25: Sockelelement
- 26: Grundplatte
- 27: Lasche
- 28: Flansch
- 29: Lasche
- 30: Schweißnaht
- 31: Lappen
- 32: Flansch
- 33: Riegel
- 34: Stellglied
- 35: Bolzen
- 36: Dichtung
- 37: Fußabschnitt
- 38: Nut
- 39: vorspringender Abschnitt
- 40: Abschlussflansch
- 41: Endstück
- 42: Winkelstück
- 43: Schenkel
- 44: Schenkel
- 45: Lagerschraube
- 46: Distanzring
- 47: Seitenwand
- 48: Beschlagteil
- 49: Lenker
- 50: Antriebsmechanik
- 51: Stab

## Patentansprüche

1. Auswurfkrümmer (6) für eine selbstfahrende Erntemaschine (1), mit Wänden (12, 13, 14), die einen sich von einem Einlass zu einem Auslass erstreckenden Gutkanal (17) begrenzen, **dadurch gekennzeichnet, dass** die Wände (12, 13, 14) wenigstens lokal mehrschichtig als ein wenigstens ein Blech (15, 16) aus Aluminium umfassendes Sandwichprofil gebildet sind.

2. Auswurfkrümmer nach Anspruch 1, bei dem das Sandwichprofil wenigstens ein äußeres Blech (15) und ein sich zwischen dem äußeren Blech (15) und dem Gutkanal (17) erstreckendes inneres Blech (16) umfasst, wobei in einer durch den Auswurfkrümmer (6) verlaufenden Schnittebene zwischen zwei Bereichen (20), in denen das äußere und das innere Blech (15, 16) aneinander befestigt sind, ein Bereich (19) liegt, in dem die Bleche (15, 16) voneinander beabstandet sind.

3. Auswurfkrümmer nach Anspruch 2, bei der
- der Bereich (19), in dem die Bleche (15, 16) voneinander beabstandet sind, sich in Längsrichtung des Gutkanals (17) erstreckt; und/oder
- ein Bereich des inneren Blechs (16), der den Gutkanal (17) begrenzt, eben ist.

4. Auswurfkrümmer nach einem der vorhergehenden Ansprüche, bei dem das Sandwichprofil wenigstens eine Seitenwand (12) des Gutkanals (17) bildet.

5. Auswurfkrümmer nach einem der vorhergehenden Ansprüche, mit wenigstens zwei in Gutfördereinrichtung aufeinanderfolgenden und beweglich, insbesondere schwenkbar, verbundenen Abschnitten (7, 8, 9).

6. Auswurfkrümmer nach Anspruch 5, ferner mit einer in einer ausgestreckten Konfiguration der Abschnitte (7, 8) zwischen den Abschnitten (7, 8) komprimierten Dichtung (36), wobei die Dichtung (36) einen in eine Nut (38) eines der Abschnitte (7) formschlüssig eingreifenden Fußabschnitt (37) aufweist.

7. Auswurfkrümmer nach Anspruch 6, bei dem die Nut (38) und der Fußabschnitt (37) ein Schwalbenschwanzprofil aufweisen.

8. Auswurfkrümmer nach Anspruch 6 oder 7, bei dem die Dichtung (36) einen Hohlraum umfasst und der Hohlraum wenigstens überwiegend in einem aus der Nut (38) vorspringenden Abschnitt (39) der Dichtung (36) angeordnet ist.

9. Auswurfkrümmer nach einem der Ansprüche 5 bis 8, bei dem die Förderrichtung des Ernteguts durch den Gutkanal (17) in einer vertikalen Ebene verläuft und die Abschnitte (7, 8) um eine zu der Ebene parallele Achse (A2) schwenkbar miteinander verbunden sind.

10. Auswurfkrümmer nach einem der Ansprüche 5 bis 9, bei dem ein Scharnier (11), das die Abschnitte (7, 8) verbindet, an dem Sandwichprofil verankert ist.

11. Auswurfkrümmer nach Anspruch 10 und Anspruch 2, bei dem das Scharnier (11) an dem Sandwichprofil über ein Sockelelement (25) verankert ist, wobei eine Grundplatte (26) des Sockelelements (25) den Bereich (19) überdeckt, in dem die Bleche (15, 16) voneinander beabstandet sind, und eine von der Grundplatte (26) abgewinkelte Lasche (29) einen komplementär zu dem Bereich (19) ausgeschnittenen und an dem äußeren Blech (15) verschweißten (30) Rand aufweist.

12. Auswurfkrümmer nach Anspruch 10 oder 11, bei dem das Sandwichprofil ein erstes Sandwichprofil ist, der an einer anderen Wand (12) des Gutkanals (17) ein zweites Sandwichprofil gegenüberliegt, und bei dem ein Riegel (33) zum Fixieren der Abschnitte (7, 8) in der ausgestreckten Konfiguration an dem zweiten Sandwichprofil verankert ist.

13. Auswurfkrümmer nach Anspruch 5, bei dem einer der Abschnitte eine Endklappe (9) ist und der andere Abschnitt (8) einen der Endklappe (9) zugewandten Abschlussflansch (40), ein über den Abschlussflansch (40) vorspringendes und in die Endklappe (9) eingreifendes Endstück (41) und ein Winkelstück (42) umfasst, von dem ein erster Schenkel (43) an dem Abschlussflansch (40) befestigt ist und ein zweiter Schenkel (44) von dem Abschlussflansch (40) vorspringt, wobei die Endklappe (9) mit dem anderen Abschnitt (8) über einen Lagerstift (45) verbunden ist, der das Endstück (41), eine Seitenwand (47) der Endklappe (9) und den zweiten Schenkel (44) durchsetzt.

14. Auswurfkrümmer nach Anspruch 13, bei der die Seitenwand (47) der Endklappe (9) lokal durch ein Beschlagteil (48) verstärkt ist und der Lagerstift (45) durch das Beschlagteil (48) verläuft.
